Europäisches Patentamt

European Patent Office

Office européen des brevets

(19)

(11) Publication number: 0 513 653 A2

## EUROPEAN PATENT APPLICATION

(12)

(21) Application number: 92107661.8

(51) Int. Cl.5: G06F 9/44, G06F 15/353

(22) Date of filing: 06.05.92

(30) Priority: 10.05.91 US 698634

(43) Date of publication of application:
19.11.92 Bulletin 92/47

(84) Designated Contracting States:
DE FR GB

(71) Applicant: SIEMENS AKTIENGESELLSCHAFT
Wittelsbacherplatz 2
W-8000 München 2(DE)

(72) Inventor: Schwanke, Robert W.
1315 Monroe Drive
North Brunswick, NJ 08902(US)
Inventor: Hanson, Stephen J.
28 Cranbury Road
Princeton, NJ 08550(US)

(54) Method for estimating similarity function coefficients from object classification data.

(57) Given a set of objects {A, B, C, ...}, each described by a set of attribute values, and given a classification of these objects into categories, a similarity function accounts well for this classification only a small number of objects are not correctly classified. This is obtained when coefficients are found for the similarity function which result in an error rate that is considered to be an acceptable level. A method for estimating a coefficient for a similarity function comprises the steps of: (a) selecting an initial value $w = w_0$ as the initial coefficient of a similarity function $SIM_w(a,b)$; (b) selecting an initial value $k = k_0$ defining the number of most-similar objects to use when testing the classification of an object; (c) computing similarity measures by using the current estimate of $SIM_w$ for an object S to neighboring objects $G_i$ in the given category and for the object S to neighboring objects $B_j$ outside the given category, and forming a training set of respective data $\langle S, SIM_w(S,G_i), SIM_w(S,B_j)\rangle$ for members in the category and those outside the category; (d) reducing the training set by eliminating all data except for the k-nearest (most similar) objects of $G_i$ and $B_j$; (e) estimating new coefficients for the similarity function by adjusting w to minimize an error rate measured in terms of the extent to which neighboring objects $B_j$ outside the category have higher similarity measures than neighboring objects $G_i$ within the category; and (f) repeating steps (c), (d), and (e) until the error rate is reduced below a predetermined low level.

EP 0 513 653 A2

FIG. 6

REDUCE DATA SET TO k NEAREST OBJECTS — 23

ESTIMATE NEW VALUE FOR w — 24

FOCUS DATA SET WITH REDUCED VALUE OF k — 25

ERROR RATE LOW? k LOW? — NO / YES

END — 26

SELECT INITIAL VALUE w=w₀ — 20

SELECT INITIAL VALUE k=k₀ — 21

TRANSFORM TO SIMILARITY DATA — 22

FIELD OF INVENTION

The present invention relates to a method for evaluating the classification of objects into categories, and particularly, to one for estimating coefficients for a similarity function usable for classification. The method has particular application for automated analysis of the composition structure of a large software program.

BACKGROUND OF INVENTION

A composition structure for a large software program is an "organization chart" that groups procedures into modules, modules into subsystems, subsystems into bigger subsystems, and so on. The composition structure chart is used for project management, integration planning, design, impact analysis, and almost every other part of software development and maintenance. In a well-designed system, each module or subsystem contains a set of software units (procedures, data structures, types, modules, subsystems) that collectively serve a common purpose in the system. However, because the purposes and roles of software units frequently overlap, it is not always easy to decide how a system should be divided up. Furthermore, during the evolution of a large software system over several years, many software units are added, deleted, and changed. The resulting organization chart may no longer have any technical rationale behind it, but may instead be the result of economic expediency, or simple neglect. Its poor quality then increases the cost of software maintenance, by impeding technical analysis.

Generally, when a software system that has been developed by a large team of programmers has matured over several years, changes to the code may introduce unexpected interactions between diverse parts of the system. This can occur because the system has become too large for one person to fully understand, and the original design documentation has become obsolete as the system has evolved. Symptoms of structural problems include too many unnecessary recompilations, unintended cyclic dependency chains, and some types of difficulties with understanding, modifying, and testing the system. Most structural problems cannot be solved by making a few "small" changes, and most require the programmer to understand the overall pattern of interactions in order to solve the problem.

A field of application of the present invention is in the implementation of a software architect's "assistant" for a software maintenance environment. The "assistant" is a computer program for helping the software architect to analyze the structure of the system, specify an architecture or chart for it, and determine whether the actual software is consistent with the specification. Since the system's structural architecture may never have been formally specified, it is also desirable to be able to "discover" the architecture by automatically analyzing the existing source code. It should also be possible to critique an architecture by comparing it to the existing code and suggesting changes that would produce a more modular specification.

A common approach to structural analysis is to treat cross-reference information as a graph in which software units appear as nodes and cross-references appear as edges. Various methods, both manual and automatic, may then be used to analyze the graph. Recent work has used clustering methods to summarize cross-reference graphs, by clustering nodes into groups, and then analyzing edges between groups. See, e.g., Yoelle S. Maarek and Gail E. Kaiser, "Change Management in Very Large Software Systems", Phoenix Conference on Computer Systems and Communications, IEEE, March 1988, pp. 280-285, and Richard W. Selby and Victor R. Basili, "Error Localization During Software Maintenance: Generating Hierarchical System Descriptions from the Source Code Alone", Conference on Software Maintenance--1988, IEEE, Oct. 1988. Other currently available methods for recovering, restructuring, or improving the composition structure chart are "manual", involving much reading and trial and error.

Clustering algorithms may be either batch or incremental. A batch algorithm looks at all of the data on all objects before beginning to cluster any of them. An incremental algorithm typically looks at one object at time, clustering it with the objects it has already looked at before looking at the next object. The heart of a batch algorithm is the similarity measure, which is a function that measures how "similar" two groups of objects are (each group can have one or more members). The batch algorithm takes a large set of individual objects and places them together in groups, by repeatedly finding the two most similar objects (or groups of objects) and putting them together. The batch algorithm typically produces groups with two subgroups. This is unnatural for most purposes; instead it is preferable to merge some sub-groups to make larger groups.

Prior art applications of clustering to software analysis have generally fallen into two categories. One category is conceptual clustering for re-use, as discussed in Maarek and Kaiser, referred to above. This work finds a way to specify the external interface of a software unit, including its function, and then classify units drawn from many different system to place them in a library where they can be found and re-used.

2

They cannot use shared names for classification because two similar units drawn from different systems would use different names.

Another category is statistical clustering which attempts to predict errors and predict the impact of changes, as discussed in Selby and Basili, referred to above. This work classifies the software units according to the number of "connections" between them, which may be procedure calls, data flow paths, or names used in one group that are the names of units in the other group. The resulting groups can be used to plan integration sequences for large software systems, and can be measured to predict the likelihood of errors in them. However, the groups do not have lists of shared characteristics that would explain to the programmer why they were grouped together. There is no evidence yet that the groups computed this way would be appropriate for describing the structure of the whole system.

It is a therefore a general object of the present invention to automate the task of analyzing the composition structure of a large software program by using computerized clustering methods for grouping objects into groups according to similar attributes. It is a particular object of the invention to provide feedback on classification decisions that can lead to improved classification. Specifically, it is desired to provide a method for estimating the optimal coefficients for a similarity function which accounts well for the classification of objects in a category.

## SUMMARY OF INVENTION

Conceptual clustering methods are applied to computerized software structure analysis. Objects are classified for inclusion in a group, module, or subsystem by measuring the extent to which its members use the same software units, i.e., clustering by NAMES-USED, and the extent to which the members of a subsystem are used together by other software units, i.e., clustering by USER-NAMES. The objects are described by a pair of measured attribute values for NAMES-USED and USER-NAMES.

In the present invention, it is recognized that providing feedback on classification decisions can lead to improved classification. Given a set of objects {A, B, C, ...}, each described by a set of attribute-value pairs, and given a classification of these objects into categories, it is desireable to find a similarity function which accounts well for this classification. A similarity function is used to test the classification of an object S by computing the similarity $SIM(S,N)$ of the object S to each other classified object N, and identifying the k most-similar objects. An object S is correctly classified when it is already in the same class as the majority of the k objects most similar to it. The similarity function accounts well for a classification when only a small number of objects are not correctly classified. This is obtained when coefficients are found for the similarity function which result in an error rate that is considered to be an acceptable level.

In accordance with the present invention, a method for estimating an optimal coefficient for a similarity function used for the classification of objects in a given category, the objects being defined by respective sets of attribute values, comprises the steps of:

(a) selecting an initial value $w = w_o$ as the initial coefficient of a similarity function $SIM_w(a,b)$ for measuring the similarity of the attribute values of any two objects;

(b) selecting an initial value $k = k_o$ defining the number of most-similar objects to use when testing the classification of an object;

(c) computing similarity measures by using the current estimate of $SIM_w$ for an object S to neighboring objects $G_i$ in the given category and for the object S to neighboring objects $B_j$ outside the given category, and forming a training set of respective data $\langle S, SIM_w(S,Gi), SIM_w(S,B_j) \rangle$ for members in the category and those outside the category;

(d) reducing the training set by eliminating all data except for the k-nearest (most similar) objects of $G_i$ and $B_j$;

(e) estimating new coefficients for the similarity function by adjusting w to minimize an error rate measured in terms of the extent to which any of the neighboring objects $B_j$ outside the given category have higher similarity measures to S than those of the neighboring objects $G_i$ within the given category; and

(f) repeating steps (c), (d), and (e) until or the error rate is reduced below a predetermined low level.

The above-described estimation method finds the similarity function which is an approximation of an "ideal" similarity function for classifying objects in the given category. The optimal similarity function may be used in conjunction with clustering methods for object classification.

## BRIEF DESCRIPTION OF DRAWINGS

The above objects and further features and advantages of the invention are described in detail below in conjunction with the drawings, of which:

FIGS. 1, 2, and 3 are call graphs comparing the use of conceptual clustering methods to statistical clustering methods for the classification of objects in software analysis;

FIG. 4 is a block diagram of the steps in an automated software analysis program for classifying software objects into categories according to measured shared-name attribute values and generating a composition chart of the categorized objects;

FIG. 5 is a schematic drawing showing illustrating the problem of deriving a similarity function which accounts well for a given object classification;

FIG. 6 is a block diagram of a method for estimating the coefficients for the similarity function which accounts well for the object classification and which is usable for classifying objects in that category.

## DETAILED DESCRIPTION OF PREFERRED EMBODIMENTS

A conceptual cluster is a group of entities that have common properties which can describe a unifying concept. An initial step is to find the common properties of units of software, and then to use them to place the units in groups. These groups, and groups of groups, form the composition structure chart, which is termed a "classification tree" or "concept tree".

Conceptual clustering is a special case of statistical clustering. In the general case, any kind of information about objects can be used to cluster them, and there need not be any list of common properties. Conceptual clustering can be used when each individual object has similar characteristics or attributes, and the objects are grouped according to these attributes.

When the units of a subsystem share a common purpose, it is often reflected in a set of variables, procedures, and data types that they use. These may actually be hidden within the subsystem, where no other units may use them, or they may simply be used intensively within the subsystem, and only rarely outside it. One measure of the quality of a subsystem is the extent to which its members use the same software units. Another reflection of a common purpose is the extent to which the members of a subsystem are used together by other software units.

It is herein recognized that the names of (non-local) variables, procedures, macros, and types used by a software unit are important characteristics of the unit, and may be used effectively to cluster it, hereinafter referred to as the NAMES-USED. Furthermore, the names of other units, in which a given unit's name is used, may also be used effectively to cluster a unit and are hereinafter referred to as the USER-NAMES.

Thus, the NAMES-USED and USER-NAMES can be treated as "features" or "attributes" of the software unit. Doing so allows the use of similarity measures based on these shared features. While the literature relating to classification normally uses dissimilarity measures, the more intuitive term "similarity measure" is preferred herein. The use of similarity measures in turn allows the use of automated "conceptual clustering" methods, which were originally developed for classification, pattern recognition, information retrieval, and machine learning, and are applied herein to software analysis.

The application of clustering in the present invention differs considerably from prior art applications. In the present invention, a goal of conceptual clustering is to look for shared implementation concepts, as reflected in shared names. Prior systems, on the other hand, look either for similar specifications, as in software re-use libraries, or for operational subsystems, as in software error prediction metrics. In the present invention, similar units grouped together are all drawn from the same software system, whereas prior art clustering for re-use classifies units drawn from different systems. In statistical clustering applications, the similarity measures are designed in isolation, rather than being derived from a category utility measure. This means that the quality of the overall tree structure is not explicitly considered in the design of the similarity measure. In most published software clustering experiments, similarity has been based on the number of "connections" between software units. The connections may be names used, procedures called, data dependency paths, or other kinds of connections. The drawback of this approach is that two software units that are not connected to each other are unlikely to be placed in the same group, even if they perform similar functions for many of the same "clients" in the software system.

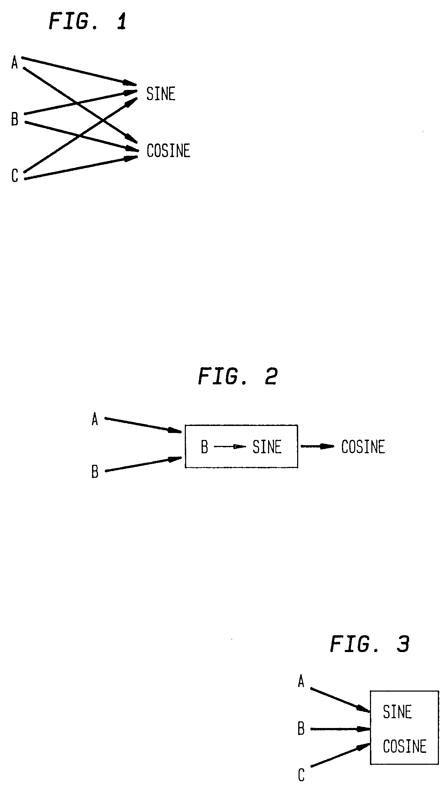

In the present invention, a similarity function based on the shared characteristics NAMES-USED and USER-NAMES, rather than on connections between the compared groups, is found to be more effective at discovering objects that are similar in design, especially when those objects have few direct connections between them. For example, the SINE and COSINE routines are common routines in a mathematical software library. One would not expect that either one of them will actually call, or pass data to, the other. On the other hand, one could expect that many of software modules that call the SINE routine would also call the COSINE routine, and vice versa. This situation is portrayed in a hypothetical call graph shown in Figure 1.

A similarity measure based on the prior art method of measuring connection strength might determine that SINE is more similar to A, B, or C than it is to COSINE. Clustering the two most similar nodes might produce the graph in Figure 2, showing modulo permutations of {A, B, C} and {SINE, COSINE}, which is not an acceptable result. Rather, what is required is a similarity measure that recognizes the parallel structure apparent in Figure 2.

The similarity measures for NAMES-USED and USER-NAMES employed in the present conceptual clustering methods, i.e., those based on "shared names" do this very well. In Figure 1, both SINE and COSINE share USER-NAMES A, B, and C. Conversely, A, B, and C all share the NAMES-USED SINE and COSINE. Clustering the two nodes that share the most common names produces the graph in Figure 3 which represents the correct groupings.

Another clustering analysis method in the present invention represents edges in a graph as "features" of the nodes they connect, and measures similarity of nodes by looking at which features two nodes have in common, and which are different. In software engineering graphs, nodes {A, B, C, ...} are represented by objects of the same names, and edges (X,Y) are represented by giving the object X a feature #Y, and giving the object Y a feature &X, where the name convention of &M and #M are used to represent an object's predecessors and successors in the graph, respectively. These graphs represent cross-reference information. The set of features {#M} of object X represent the non-local names that it uses (its NAMES-USED), and the set of features {&M} represent the names of other software units that use the name X (its USER-NAMES). In the previous example, the SINE and COSINE routines both have features (&A, &B, &C), and the routines A, B, and C have features (#SINE, #COSINE).

By representing the cross-references as features, we can easily identify names that are common to (shared by) two nodes, by comparing their feature lists. Useful similarity measures can be defined by counting the number of shared names, non-shared names, or both. Aggregate measures can also be defined for measuring similarity between two groups of objects, by looking at the frequency with which common features occur in the groups. Shared-name similarity measures do not replace or subsume connection strength measures. If two nodes are connected, but have no shared names, the similarity between them will be zero. However, it is recognized that composite similarity measures based on both connection strength and shared names may be useful.

Even where it is not known exactly what information a name represents, seeing the same name occurring in two software units suggests that their implementations are related. This may be due to a shared variable, macro, type, or procedure. In each case, it means that they both rely on the functional specification of the shared name. If a group of software units share a set of data types, variables, macros, and/or procedures which few other units use, the group should be considered as a potential module.

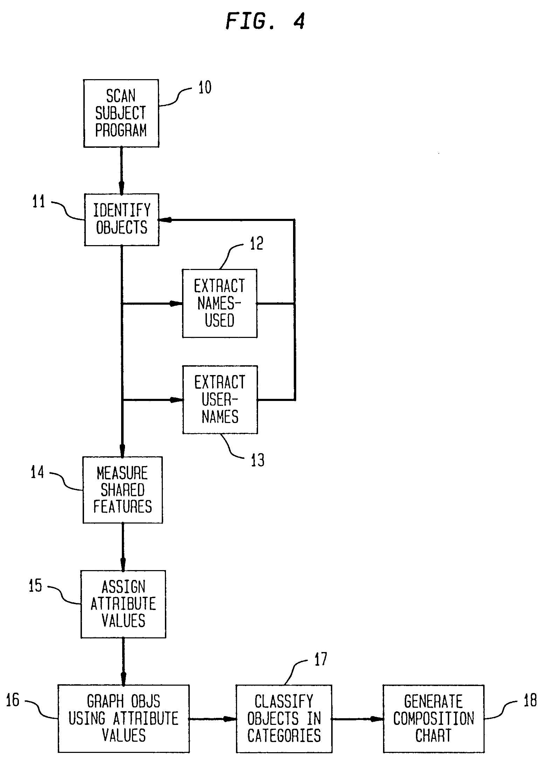

In Figure 4, a block diagram illustrates the basic steps in the application of conceptual clustering methods as applied to software analysis using the above-described attributes of NAMES-USED and USER-NAMES. In the first block 10, the source code of the subject software program is scanned using, for example, a text string search. Objects such as files, procedures, routines, modules, and/or subsystems are identified at block 11, and the names of routines called or referenced by the objects, i.e., NAMES-USED, as well as the names of routines calling or referencing the objects, are extracted at blocks 12 and 13. The shared features of the objects, i.e., shared NAMES-USED and USER-NAMES, are compared at block 14, and a pair of attribute values are assigned at block 15 based upon measures of the extent of shared names. At block 16, the objects are compared by graphing them using their attribute values for coordinates on the graph axes. At block 17, the objects are classified into categories, by human expertise through visual analysis of the graph, and/or by computing similarity measures using a similarity function for calculating their "closeness", i.e., Euclidean distance, to neighboring objects. The similarity function is described in greater detail below in conjunction with a coefficient estimation method of the present invention. When the objects have been classified into categories, a charting routine at block 17 is used to generate a tree composition chart using conceptual clustering algorithms.

In copending U.S. Patent Application Serial No. 07/525,376 of Schwanke et al., entitled "Method For Software Structure Analysis Using Conceptual Clustering", filed on May 17, 1990, various conceptual clustering methods based upon shared-name features are disclosed. Hierarchical ascending classification (HAC) algorithms are described for forming clusters (classes) of objects in a bottom-up fashion, by forming small clusters of closely-related or very similar objects, then combining the small clusters into larger clusters, then finally forming a classification tree whose leaves are the original objects, and whose interior nodes are the classes. Contrarily, partitioning algorithms are used to divide a set of classes into two or more classes, then recursively divide each class. A "massage" recursive procedure is used to increase the average branching factor of a tree by eliminating low-utility interior nodes. Utility is measured by a category utility function CU(T) which is the product of the size and "purity" of a category. "Purity" is measured as the sum of squares of feature frequencies, i.e., of the probability that a member of a category has a given feature. Reference is made to the parent application for a more detailed description of these object classification methods.

The above-described software analysis techniques can be incorporated in a software architect assistant program. An aspect of the present invention relates to a graphical and textual "structure chart editor" for maintaining large software systems, hereinafter referred to as "ARCH". The ARCH program includes a feature extracting tool for extracting cross-reference features from existing source code, and an editor for browsing the cross-reference information, editing a subsystem composition tree (which may be initially input based upon an existing composition specification), automatically clustering procedures into modules and modules into subsystems, and identifying strong connections between procedures located in different modules.

In the present invention, it is recognized that providing feedback on classification decisions can lead to improved classification. Given a set of objects {A, B, C, ...}, each described by a set of attribute-value pairs, and given a classification of these objects into categories, it is desireable to find a similarity function which accounts well for this classification. If a similarity function is found to work well, it can be relied upon for classifying or confirming the classification of an object in that category.

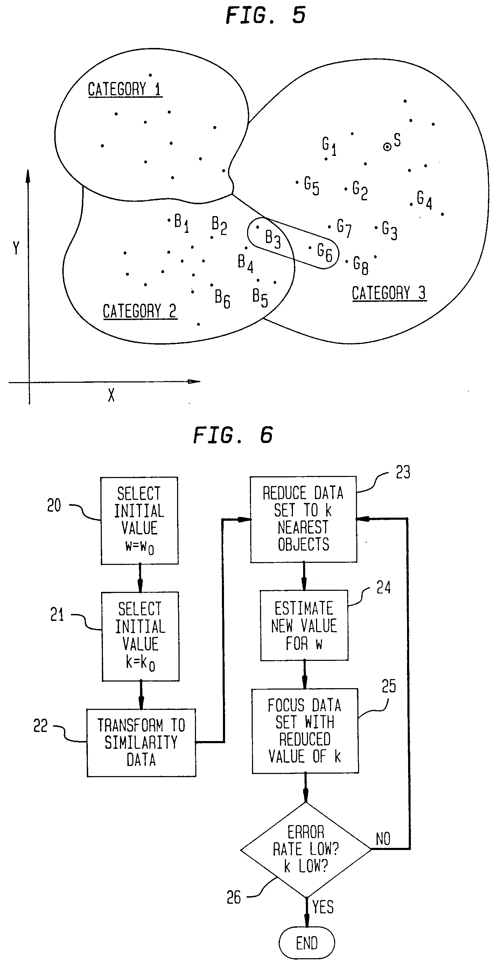

Figure 5 illustrates this problem for a very simple case. Each point in the scattergram plots an observed object, as defined by a pair of real numbers, such as its measured attribute values. The objects have been classified into Category 1, Category 2, and Category 3 by an analyst or by an analysis program viewing the plotted data and identifying clusters.

A similarity function is used to classify an object S by computing the similarity $SIM_w(S,N)$ of the object S to each other classified object N, identifying the k most-similar objects, determining which category contains the majority of these objects, and placing S in the same class. If no class contains a majority, the object S cannot be classified. An object S is deemed correctly classified when it is already in the same class as the majority of the k objects most similar to it.

A similarity function accounts for a classification when there exists a value k such that each object S is correctly classified. A similarity function accounts well for a classification when only a small number of objects are not correctly classified. A similarity function is an approximation of an "ideal" similarity measure when coefficients w are estimated for the function which results in an error rate that is considered to be an acceptable level.

The present invention provides a method for estimating the optimal coefficient for the similarity function to make it account well for a given set of objects and classification of those objects into categories. Each object is described by a tuple of values $\langle c, v_1 ... v_n \rangle$, where c is the object's assigned category, and $v_1 ... v_n$ are the values of n attributes selected to describe the object.

For example, the similarity function may be related to the Euclidean distance between objects described by a pair of attribute values, which are plotted as points on assumed X and Y axes. Such a function can be expressed as:

$$SIM_w (\langle x_1,y_1 \rangle, \langle x_2,y_2 \rangle) = 1 / [ w*(x_2-x_1)^2 + (y_2-y_1)^2 ]^{0.5}$$

The coefficient w in the formula represents the relative scale of units along the X and Y axes. Varying this parameter will change not only the absolute distances, but also the rank order of distances between pairs of points. It is desireable to find the best value for w such that, in most cases, the similarity measure for a point indicates that it should be in the same category as the points nearest (most similar) to it. For example, the two points $G_6$ and $B_3$ (circled in the diagram) may be more similar to the majority of points in Categories 2 or 3, upon how the value of w of the similarity function stretches or contracts their relative distances along the X and Y axes.

The estimation method consists of a transformation portion and a refinement portion. In the transformation portion, the classification data (attribute values of the objects) are transformed into similarity data (measures of the similarity between objects). The refinement portion consists of a data reduction procedure, an estimation procedure, and a focusing procedure, which are repeated until acceptable accuracy (low error rate) is achieved.

In Figure 6, the optimal coefficient estimation method is shown in more detail in the block diagram of Figure 6. At block 20, an initial value $w = w_o$ is selected as the initial coefficient of a similarity function $SIM_w(a,b)$ for measuring the similarity of the attribute values of any two objects. At block 21, an initial value $k = k_o$ is selected defining the number of most-similar objects to use when testing the classification of an object. The value $k_o$ is generally a large enough value to extend beyond all the points in the given category. At block 22, similarity measures are computed with the function $SIM_w$ using the current coefficient w for an object S to neighboring objects $G_i$ in the given category (Good Neighbors) and for the object S to neighboring objects $B_j$ outside the given category (Bad Neighbors), and a training set of triples data $\langle$S, $SIM_w(S,G_i)$, $SIM_w(S,B_j)\rangle$ is formed for the members in the category and those outside the category. Each datum should reflect the desired constraint $SIM_w(S,G) > SIM_w(S,B)$, i.e., S should be more similar to a neighbor in its category than to a neighbor outside its category.

In the refinement portion, beginning at block 23, the training set is reduced by eliminating all data except for the k-nearest objects of $G_i$ and $B_j$. At block 24, a new coefficient is estimated for the similarity function by adjusting w to minimize the error rate measured in terms of the extent to which any of the neighboring objects $B_j$ outside the given category have higher similarity measures to S than those of the neighboring objects $G_i$ within the given category. This estimating step uses the error function ERR, as follows:

$$ERR ( SIM_w, \langle S, SIM_w(S,G_i), SIM_w(S,B_j)\rangle ) = f ( SIM_w(S,G_i) - SIM_w(S,B_j) ),$$

where $f(a) = 1$, if $a > 0$, and $f(a) = 0$ otherwise. It thus measures the extent to which "bad neighbors" are closer to the subject point than "good neighbors".

At block 25, the training set may be focused by reducing the value of k, if appropriate. For a given value of k, the estimation step may not change the similarity function enough to cause any changes in the training set. REpeating the estimation step may not lead to any further reductions in the number of unaccounted-for data. In this case, reducing the value of k may lead to improved results if a lesser value for k is acceptable.

The procedures at blocks 23, 24 and 25 are repeated until the error rate has reached below a predetermined low level, or if k cannot be reduced further, as indicated in the test at block 26.

The estimation method can be improved by limiting the similarity functions used for object classification to monotonic functions, and using the monotonicity property to exclude training data which do not change regardless of the value of the coefficients. Since adjustment to the coefficients will not change the performance of the similarity measure of these triples, removing them from the training set could result in speeding up of the optimization process.

A general description of monotonic similarity functions is provided by Amos Tversky, in Psychology Review, vol. 84, no. 4, July 1977. Let all attributes of objects A, B, C ... be boolean, meaning that each attribute can only have the value true of false. Each object can then be represented equivalently as a set of true attributes. Let a, b, c ... be the sets of attribute names for which objects A, B, C ... , respectively, have true values. The similarity function $SIM_w$ is monotonic if:

$$SIM(A,B) \geq SIM(A,C)$$

whenever the following set relationships hold:

$$a \cap b \supseteq a \cap c,$$
$$a - c \supseteq a - b, \text{ and}$$
$$c - a \supseteq b - a,$$

where "$\cap$" represents a set intersection, "$\cup$" represents a set union, "$-$" represents set subtraction (the set of values that are in set-a but not in set-b), "$\supseteq$" represents "includes", i.e., set-a includes set-b or set-b is a subset of set-a, and "$\supset$" represents "proper inclusion", i.e., set-a has at least one element that set-b does not. Furthermore, the above inequality is strict whenever at least one of the set inclusions is proper.

When the similarity function SIM has the monotonicity property, the coefficient estimation method can use monotonic exclusion to exclude unwanted data from the training set. That is, object S is considered monotonically more similar to B than to G when attribute sets s, b, and g satisfy the inclusion conditions of the monotonicity property such that S will always be measured by the similarity function as more similar to B than to G regardless of the values of the coefficient w.

A special variation of the monotonic-exclusion method provides for restricting the class of similarity functions to those functions related to the Tversky Ratio Model of human similarity judgment. The class of similarity functions RatioSIM is defined as follows:

$$RatioSim(S,N)=R(W(s \cap n),W(s - n),W(n - s))$$
$$R(x,y,z) = ratio(x,y,z) = \frac{x}{n + x + d \times (y + z)}$$

where W is a non-negative, real-valued function of a set of features, and W(a) > W(b) whenever set-a is a superset of set-b. This similarity function can be shown to be monotonic, as long as n and d are positive.

Another variation of the monotonic-exclusion method uses a linear function for W, as follows:

$$W(s) = \sum_{p \in s} w_p$$

where each possible feature p has a non-negative weight $w_p$ associated with it.

A modification of the coefficient estimation method uses a similarity function that takes into account whether or not the compared objects are "linked". Linked(A,B) is a function whose value is 0 or 1 for every pair of inputs, and whose value is known for every pair of objects in the original classification. Intuitively, two objects are more similar if they are linked than if they are not. This modification can be adapted for monotonic functions by including the definition of monotonicity to add the condition Linked(a,b) V ¬ Linked-(a,c). It can also be adapted to ratio similarity functions by redefining:

$$RatioSim(S,N)=R( W(s \cap n), W(s - n), W(n - s), linked(S,N))$$
$$R(x,y,z,l) = ratio(x,y,z,l) = \frac{x + c \times l}{n + x + d \times (y + z)}$$
$$for\ c > 0$$

The linear definition for W works equally well on this modification as on the original method. All of the methods described above can be applied to analyzing software systems by treating modules as object classes, declaration units in modules as objects, deriving features from cross-references, and defining the link function Linked(A,B) = 1, if object A refers to object B, or if object B refers to object A, and Linked(A,B) = 0 otherwise.

The specific embodiments of the invention described herein are intended to be illustrative only, and many other variations and modifications may be made thereto in accordance with the principles of the invention. All such embodiments and variations and modifications thereof are considered to be within the scope of the invention, as defined in the following claims.

**Claims**

1. A method for estimating an optimal coefficient for a similarity function used for the classification of objects in a given category, the objects being defined by respective sets of attribute values, comprising the steps of:

(a) selecting an initial value w = $w_o$ as the initial coefficient of a similarity function $SIM_w(a,b)$ for measuring the similarity of the attribute values of any two objects;

(b) selecting an initial value k = $k_o$ defining the number of most-similar objects to use when testing the classification of an object;

(c) computing similarity measures by using the current estimate of $SIM_w$ for an object S to neighboring objects $G_i$ in the given category and for the object S to neighboring objects $B_j$ outside the given category, and forming a training set of respective data $\langle S, SIM_w(S,G_i), SIM_w(S,B_j)\rangle$ for members in the category and those outside the category;

(d) reducing the training set by eliminating all data except for the k-nearest (most similar) objects of $G_i$ and $B_j$;

(e) estimating new coefficients for the similarity function by adjusting w to minimize an error rate measured in terms of the extent to which any of the neighboring objects $B_j$ outside the given category have higher similarity measures to S than those of the neighboring objects $G_i$ within the

given category; and

(f) repeating steps (c), (d), and (e) the error rate is reduced below a predetermined low level.

2. A method for estimating an optimal coefficient for a similarity function according to Claim 1, further comprising the step of focusing the training set by reducing the value of k in conjunction with said data reducing step and coefficient estimating step, and wherein step (f) is completed when the value of k has been reduced to a predetermined low value.

3. A method for estimating an optimal coefficient for a similarity function according to Claim 1, wherein the similarity function is restricted to monotonic functions, and the monotonicity property is used in an monotonicity exclusion step to exclude training data which do not change regardless of the value of the coefficient.

4. A method for estimating an optimal coefficient for a similarity function according to Claim 3, wherein all attributes of objects A, B, C ... are treated as boolean, each object is represented equivalently as a set of true attributes, sets a, b, c ... are the sets of attribute names for which objects A, B, C ... , respectively, have true values, and the similarity function $SIM_w$ is monotonic if:

$$SIM(A,B) \geq SIM(A,C)$$

whenever the following set relationships hold:

$a \cap b \supseteq a \cap c,$
$a - c \supseteq a - b,$ and
$c - a \supseteq b - a,$

where "$\cap$" represents a set intersection, "$\cup$" represents a set union, "-" represents set subtraction (the set of values that are in set-a but not in set-b), "$\supseteq$" represents "includes", i.e., set-a includes set-b or set-b is a subset of set-a, and "$\supset$" represents "proper inclusion", i.e., set-a has at least one element that set-b does not.

5. A method for estimating an optimal coefficient for a similarity function according to Claim 1, wherein the similarity function is restricted to those functions related to the Tversky Ratio Model of human similarity judgment.

6. A method for estimating an optimal coefficient for a similarity function according to Claim 5, wherein the similarity function is restricted to the class of functions RatioSIM, defined as follows:

$$RatioSim(S,N) = R(W(s \cap n), W(s - n), W(n - s))$$
$$R(x,y,z) = ratio(x,y,z) = \frac{x}{n + x + d \times (y + z)}$$

where W is a non-negative, real-valued function of a set of features, and W(a) > W(b) whenever set-a is a superset of set-b, and n and d are positive.

7. A method for estimating an optimal coefficient for a similarity function according to claim 6, wherein W is a linear function, as follows:

$$W(s) = \sum_{p \in s} w_p$$

where each possible feature p has a non-negative weight $w_p$ associated with it.

8. A method for estimating an optimal coefficient for a similarity function according to claim 1, wherein the similarity function takes into account whether or not the compared objects are linked.

9. A method for estimating an optimal coefficient for a similarity function according to claim 8, wherein Linked(A,B) is a function whose value is 0 or 1 for every pair of inputs, and whose value is known for every pair of objects in the original classification, and the restriction of the similarity function to monotonic functions includes in the definition of monotonicity the condition Linked(a,b) V ¬ Linked(a,c).

10. A method for estimating an optimal coefficient for a similarity function according to Claim 8, wherein Linked(A,B) is a function whose value is 0 or 1 for every pair of inputs, and whose value is known for every pair of objects in the original classification, and the restriction of the similarity function to the class of functions RatioSIM includes the definition:

$$RatioSim(S,N) = R(W(s \cap n), W(s - n), W(n - s), linked(S,N))$$
$$R(x,y,z,l) = ratio(x,y,z,l) = \frac{x + c \times l}{n + x + d \times (y + z)}$$
$$for\ c > 0$$

11. A method for estimating an optimal coefficient for a similarity function according to Claim 1, wherein the objects classified are objects of a software program system.

12. A method for estimating an optimal coefficient for a similarity function according to Claim 9, wherein the objects classified are objects of a software program system, and wherein modules of the software program system are treated as categories, declaration units in modules are treated as objects, and the function Linked(A,B) = 1, if object A refers to object B, or if object B refers to object A, and Link(A,B) = 0 otherwise.

13. A method for estimating an optimal coefficient for a similarity function according to Claim 1, wherein the objects classified are objects of a software program system, and wherein the feature vectors of the objects represent names used (NAMES-USED) by the objects and the names of higher level objects using the objects (USER-NAMES).

14. A method for estimating an optimal coefficient FOR a similarity function according to Claim 13, wherein each object is characterized by a pair of attribute values representing common NAMES-USED and common USER-NAMES.

10

*FIG. 1*

A → SINE

B → COSINE

C

*FIG. 2*

A →

B →

| B → SINE |

→ COSINE

*FIG. 3*

A →

B →

C →

| SINE |
| COSINE |

## FIG. 4

```
        ┌──────────┐
        │  SCAN    │      ┌ 10
        │ SUBJECT  │
        │ PROGRAM  │
        └──────────┘
              │
              ▼
11 ┐    ┌──────────┐
        │ IDENTIFY │◄──────────────────┐
        │ OBJECTS  │                    │
        └──────────┘        ┌ 12        │
          │                 │           │
          │           ┌──────────┐      │
          ├──────────►│ EXTRACT  │──────┤
          │           │ NAMES-   │      │
          │           │  USED    │      │
          │           └──────────┘      │
          │                             │
          │           ┌──────────┐      │
          ├──────────►│ EXTRACT  │──────┘
          │           │  USER-   │
          │           │  NAMES   │
          │           └──────────┘
          │                 └ 13
          ▼
14 ┐  ┌──────────┐
      │ MEASURE  │
      │ SHARED   │
      │ FEATURES │
      └──────────┘
          │
          ▼
15 ┐  ┌──────────┐
      │  ASSIGN  │
      │ ATTRIBUTE│
      │  VALUES  │
      └──────────┘
          │
          ▼
16 ┐ ┌──────────────┐    17 ┐ ┌──────────┐      ┌──────────────┐
     │  GRAPH OBJS  │        │ CLASSIFY │        │  GENERATE    │  ┌ 18
     │USING ATTRIBUTE│──────►│OBJECTS IN│──────► │ COMPOSITION  │
     │   VALUES     │        │CATEGORIES│        │    CHART     │
     └──────────────┘        └──────────┘        └──────────────┘
```

## FIG. 5

## FIG. 6